(19) Europäisches Patentamt

European Patent Office

Office européen des brevets

(11) **EP 4 527 682 A1**

(12) # EUROPEAN PATENT APPLICATION

(43) Date of publication:
**26.03.2025 Bulletin 2025/13**

(21) Application number: **24196193.7**

(22) Date of filing: **23.08.2024**

(51) International Patent Classification (IPC):
**B60L 53/64** (2019.01)    **B60L 55/00** (2019.01)
**G06N 3/08** (2023.01)    **G06Q 50/40** (2024.01)

(52) Cooperative Patent Classification (CPC):
**G06N 3/08; B60L 53/63; B60L 53/64; B60L 53/66; B60L 53/67; B60L 55/00; G06N 3/006; G06Q 50/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.09.2023 IN 202321063946**

(71) Applicant: **Tata Consultancy Services Limited Maharashtra (IN)**

(72) Inventors:
• **GARG, KSHITIJ**
 **560066 Bengaluru, Karnataka (IN)**
• **MISRA, PRASANT KUMAR**
 **560066 Bangalore, Karnataka (IN)**
• **BICHPURIYA, YOGESH KUMAR**
 **411057 Pune, Maharashtra (IN)**
• **VASAN, ARUNCHANDAR**
 **600086 Chennai, Tamil Nadu (IN)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **METHOD AND SYSTEM FOR MANAGING A BIDIRECTIONAL CHARGING AT AN ELECTRIC VEHICLE (EV) CHARGING STATION**

(57)   This disclosure relates generally to a bidirectional charging at an electric vehicle (EV) charging station by an energy model that uses electricity bought from the day-ahead market for charging the fleet of electric vehicles (EVs) and uses the intra-day market for arbitrage. The competitive pricing of wholesale electricity markets and distributed energy resource capability of EV fleets (in addition) provide a revenue channel through energy arbitrage. To effectively handle electricity price variations and the energy demand of the EV fleet, the present disclosure utilizes a graph representation-based learning agent (LA3_D) with two-stage encoding for day-ahead charge planning; and a priority order based greedy heuristic (GH_I) for intra-day arbitrage planning. Because the agent learns the planning policy of mapping EVs to charging operations over several problem instances, it is able to solve a given instance with limited sub-optimality when put to test at different levels of scale.

FIG. 5

**Description**

CROSS-REFERENCE TO RELATED APPLICATIONS AND PRIORITY

The present application claims priority from Indian patent application no. 202321063946, filed on September 23, 2023.

TECHNICAL FIELD

The disclosure herein generally relates to the field of bidirectional charging at an electric vehicle (EV) charging station, and, more particularly, to a method and system for bidirectional charging at an electric vehicle (EV) charging station with an energy model that uses electricity bought from the day-ahead market for charging the fleet and uses the intra-day market for arbitrage with arbitrage.

BACKGROUND

Recent years have seen an exponential growth in the adoption of electric vehicles (EV) for last-mile deliveries. EV fleets are of particular interest to e-commerce companies since they not only curtail vehicular emissions but can also reduce the cost of operations; both of which are key metrics for sustainable business operations. Because profit margins are quite thin in the e-commerce business, companies seek revenue opportunities while optimizing costs. In this regard, EV fleets can function as a distributed energy resource (DER). The energy demands of EV fleets are reasonably predictable due to the repeating nature of last-mile deliveries and daily distance traveled. The consolidated energy stored in the batteries of the EVs at a fleet-scale is, therefore, an arbitrage opportunity in the electricity markets (such as day-ahead or intra-day) or can provide ancillary services to the grid operator; without impacting operations. Here, the opportunity to generate additional revenue arises when the cost of charging is less than the benefit of discharging. Grid interaction via the wholesale electricity market presents an opportunity for EVs to charge when the electricity price is low and vice versa. However, fleet managers need to operate such a system within the constraints of the installed captive charging infrastructure and delivery requirements of the fleet. The charging operation constraints arise due to (*i*) fewer charging points than EVs (on account of high capital expenditure and efforts to recover it as the earliest by better asset utilization); (ii) capacity limitation of the grid connection line to the charging facility; and (*iii*) scheduled black-outs or brown-outs (that are typical in developing economies). Delivery fulfillment needs all EVs in the fleet to be charged adequately for them to complete the assigned trip routes, and deal with any associated uncertainties that could arise in transit. Furthermore, they would need to return to the depot and prepare (i.e., load goods and charge) for their next scheduled departures. In addition, charging/discharging takes much longer than re-fueling existing non-EVs. Electricity can be traded (buy/sell) in the wholesale markets (e.g., day-ahead, and intra-day). In a day-ahead market, electricity can be traded a day in advance; while an intra-day market allows trading time up to (typically) an hour before the delivery time. Trading in both the markets provides opportunity to hedge the risk of volume and price uncertainties. There is a large body of existing work that has explored various models to transact energy between EV fleets and day-ahead, intra-day markets. One model is to trade energy in the day-ahead market and adjust the deviation in day-ahead energy commitments (that arise due to uncertainty in EV charging demand) through intra-day transactions. However, given that the energy demand of last-mile EV delivery fleets is reasonably predictable, this model does not capitalize well on the greater price volatility of the intra-day market to derive better returns; as most of the energy commitments are already made in the day-ahead market, and therefore, leaves limited room for major trades in the intra-day market. Another model is to fulfill the fleet energy demand through the grid or other reliable captive sources (e.g., battery bank), while offering to trade energy only in the intra-day market. However, this approach does not capitalize on the day-ahead market dynamics that could potentially fetch energy at lower costs. Managing the charging/discharging operation using the proposed energy transaction model requires EVs to be assigned to compatible, available charging points in time. This problem is non-trivial due to the following reasons: (i) there is limited charging flexibility due to constraints on the available supply capacity and length of vehicle stay in the depot; (*ii*) there is limited trading flexibility due to day-ahead commitments that needs to be prioritized before intra-day transactions; (iii) there is propagation of planning errors/deviations when vehicles do multiple trips in a day; (iv) there is a higher degree of computation complexity to obtain a fleet-level plan with heterogeneous vehicles (with different battery capacities) and charger types (with different power ratings and connectors); (v) there is electricity price volatility in the energy markets whose trends differ across day-ahead and intra-day market segments. All of these factors make the planning decision hard and finding a decision support mechanism for large-scale EV (bidirectional) charging operation (consisting of hundreds of vehicles and chargers) becomes even harder.

## SUMMARY

Embodiments of the present disclosure present technological improvements as solutions to one or more of the above-mentioned technical problems recognized by the inventors in conventional systems. For example, in one embodiment, a method of managing bidirectional charging at the electric vehicles (EVs) charging station is provided. The method includes, receiving, via a day-ahead planning module, a trip plan of a fleet of the EVs, wherein the fleet of the EVs comprising a plurality of assigned vehicles for a day-ahead trip and a plurality of available vehicles at the EV charging station. The day ahead planning module also receives a charge plan of the EV charging station, and price of electricity of a day ahead market. The method further includes, preparing, a day-ahead charge schedule for each of the plurality of assigned vehicles via the day-ahead planning module, wherein preparing the day-ahead schedule involves selecting, from the trip plan, the plurality of vehicles assigned for the day-ahead trip. Further the module assesses a state $\overline{S_t}$ of the system at each time-step by scheming the plurality of assigned vehicles and a plurality of chargers available at the EV charging station for charging the plurality of assigned vehicles. The module then allocates, by a learning agent (LA3_D), the plurality of assigned vehicles to the plurality of chargers available and observing the state $St$ of the system at each time-step, wherein an allocation of a vehicle among the plurality of assigned vehicles to a charger among the plurality of chargers is an action At of the learning agent. The module iteratively, transitions to a next time-step, and continue allocating the plurality of assigned vehicles to the plurality of chargers and receives a reward for the action of the learning agent, wherein the reward trains a Graph Neural Network (GNN) to generate the day ahead schedule for each of the plurality of assigned vehicles. The method further includes, preparing, the intra-day schedule by an intra-day planning module, wherein preparing the intra-day schedule involves receiving the day-ahead schedule of each of the plurality of assigned vehicles generated by the day-ahead planning module and the price of electricity of an intra-day market. The module identifies available time slots for the intra-day schedule from the day-ahead schedule at each time-step by executing a greedy algorithm to determine feasibility of possible assignment of suitable charger to the available vehicle to derive charger-EV pairing. The module scans through a plurality of infeasible conditions and identifies feasible time slots for the assignment of a charger from the plurality of chargers to the available vehicle. The module discharges the available vehicle at the charger from the plurality of chargers and trading back the energy in the intra-day market; and applies a priority function to prioritize the plurality of available EVs wherein the priority function is a weighted sum of an individual priority components. The module then iteratively, prioritize the vehicle allocation until all the available vehicles for the intra-day discharging gets the charger for trading back the energy by way of discharging. The method further includes, scoring, the bidirectional charging by obtaining a cost incurred by the day-ahead planning module in charging the plurality of vehicles in the day-ahead market and profit generated by the intra-day planning module by discharging the plurality of vehicles in the intra-day market.

In another aspect, a system for a bidirectional charging at the electric vehicles (EVs) charging station is provided. The system includes at least one memory storing programmed instructions; one or more Input /Output (I/O) interfaces; and one or more hardware processors, a day-ahead planning module and an intra-day planning module, operatively coupled to a corresponding at least one memory, wherein the system is configured to receive, via a day-ahead planning module, executed by the one or more hardware processors, a trip plan of a fleet of the EVs, wherein the fleet of the EVs comprising a plurality of assigned vehicles for a day-ahead trip and a plurality of available vehicles at the EV charging station. The day ahead planning module also receives a charge plan of the EV charging station, and price of electricity of a day ahead market. The system is configured to prepare, via the one or more hardware processors, a day-ahead charge schedule for each of the plurality of assigned vehicles via the day-ahead planning module, wherein preparing the day-ahead schedule involves selecting, from the trip plan, the plurality of vehicles assigned for the day-ahead trip. Further the module assesses a state $\overline{S_t}$ of the system at each time-step by scheming the plurality of assigned vehicles and a plurality of chargers available at the EV charging station for charging the plurality of assigned vehicles. The module then allocates, by a learning agent (LA3_D), the plurality of assigned vehicles to the plurality of chargers available and observing the state St of the system at each time-step, wherein an allocation of a vehicle among the plurality of assigned vehicles to a charger among the plurality of chargers is an action At of the learning agent. The module iteratively, transitions to a next time-step, and continue allocating the plurality of assigned vehicles to the plurality of chargers and receives a reward for the action of the learning agent, wherein the reward trains a Graph Neural Network (GNN) to generate the day ahead schedule for each of the plurality of assigned vehicles. The system is configured to prepare, via the one or more hardware processors, an intra-day planning module, wherein preparing the intra-day schedule involves receiving the day-ahead schedule of each of the plurality of assigned vehicles generated by the day-ahead planning module and the price of electricity of an intra-day market. The module identifies available time slots for the intra-day schedule from the day-ahead schedule at each time-step by executing a greedy algorithm to determine feasibility of possible assignment of suitable charger to the available vehicle to derive charger-EV pairing. The module scans through a plurality of infeasible conditions and identifies feasible time slots for the assignment of a charger from the plurality of chargers to the available vehicle. The module discharges the available vehicle at the charger from the plurality of chargers and trading back the energy in the intra-day market; and applies a priority function to prioritize the plurality of available EVs wherein the priority function is a weighted sum of an individual priority components. The module then iteratively, prioritize the vehicle allocation until all the available vehicles for the intra-day discharging gets the charger for trading back the energy by way of discharging. The system is configured to score, via the one or more hardware processors, the bidirectional charging by obtaining a cost incurred by the day-ahead planning module in charging the plurality of vehicles in the day-ahead market and profit generated by the intra-day planning module by discharging the plurality of vehicles in the intra-day market.

In yet another aspect, a computer program product including a non-transitory computer-readable medium having embodied therein a computer program for managing bidirectional charging at the electric vehicles (EVs) charging station is provided. The computer readable program, when executed on a computing device, causes the computing device to receive, via a day-ahead planning module, executed by the one or more hardware processors, a trip plan of a fleet of the EVs, wherein the fleet of the EVs comprising a plurality of assigned vehicles for a day-ahead trip and a plurality of available vehicles at the EV charging station. The day ahead planning module also receives a charge plan of the EV charging station, and price of electricity of a day ahead market. The computer readable program, when executed on a computing device, causes the computing device to prepare, via the one or more hardware processors, a day-ahead charge schedule for each of the plurality of assigned vehicles via the day-ahead planning module, wherein preparing the day-ahead schedule involves selecting, from the trip plan, the plurality of vehicles assigned for the day-ahead trip. Further the module assesses a state $\overline{S_t}$ of the system at each time-step by scheming the plurality of assigned vehicles and a plurality of chargers available at the EV charging station for charging the plurality of assigned vehicles. The module then allocates, by a learning agent (LA3_D), the plurality of assigned vehicles to the plurality of chargers available and observing the state $St$ of the system at each time-step, wherein an allocation of a vehicle among the plurality of assigned vehicles to a charger among the plurality of chargers is an action At of the learning agent. The module iteratively, transitions to a next time-step, and continue allocating the plurality of assigned vehicles to the plurality of chargers and receives a reward for the action of the learning agent, wherein the reward trains a Graph Neural Network (GNN) to generate the day ahead schedule for each of the plurality of assigned vehicles. The computer readable program, when executed on a computing device, causes the computing device to prepare, via the one or more hardware processors, an intra-day planning module, wherein preparing the intra-day schedule involves receiving the day-ahead schedule of each of the plurality of assigned vehicles generated by the day-ahead planning module and the price of electricity of an intra-day market. The module identifies available time slots for the intra-day schedule from the day-ahead schedule at each time-step by executing a greedy algorithm to determine feasibility of possible assignment of suitable charger to the available vehicle to derive charger-EV pairing. The module scans through a plurality of infeasible conditions and identifies feasible time slots for the assignment of a charger from the plurality of chargers to the available vehicle. The module discharges the available vehicle at the charger from the plurality of chargers and trading back the energy in the intra-day market; and applies a priority function to prioritize the plurality of available EVs wherein the priority function is a weighted sum of an individual priority components. The module then iteratively, prioritize the vehicle allocation until all the available vehicles for the intra-day discharging gets the charger for trading back the energy by way of discharging. The computer readable program, when executed on a computing device, causes the computing device to score, via the one or more hardware processors, the bidirectional charging by obtaining a cost incurred by the day-ahead planning module in charging the plurality of vehicles in the day-ahead market and profit generated by the intra-day planning module by discharging the plurality of vehicles in the intra-day market.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for managing bi-directional charging, according to some embodiments of the present disclosure.

FIG. 2 illustrates a diagram of the steps executed by a fleet operator for preparing bidirectional charging plan day-ahead and intra-day charging of electric vehicle fleet, according to some embodiments of the present disclosure.

FIG. 3 is a functional block diagram of sequential constraint application in the day-ahead charge planning for managing the fleet of electronic vehicles, according to some embodiments of the present disclosure.

FIG. 4 is a functional block diagram of sequential constraint application in the intra-day charge planning for managing the fleet of electronic vehicles, according to some embodiments of the present disclosure.

FIG. 5 illustrates an architecture of the system of FIG. 1 for managing bi-directional charging, according to some embodiments of the present disclosure.

FIGS. 6A and 6B illustrates a flow diagram depicting a method for managing bi-directional charging, according to some embodiments of the present disclosure.

FIG. 7 is a graph depicting reward function of a training of the learning agent, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There exist multiple approaches for effectively managing the available power in the electronic vehicles at the charging stations. Exact methods such as mathematical programming, constraint programming, propositional satisfiability take extremely long computational time for large problem sizes. Heuristic methods are generally used in practice due to their relatively fast execution time at scale but yield low-quality solutions due to their myopic decision nature. The present disclosure employs a bidirectional charging mechanism along with utilizing power price fluctuation along the length of the day. In the first part, the disclosed model utilizes a day-ahead planning module that prepares EV charging plan in advance based on EV delivery schedules for the next day. Simultaneously, in the second-part, the disclosed model utilizes an intra-day planning module that estimates available EVs at the station along with the available power in each EVs and suggests to prepare next delivery EVs by charging-discharging actions.

In the day-ahead planning module, the present disclosure utilizes agent-based learning methods to solve such large-scale charging decision problems using a model learned over several problem instances collected in the past; as opposed to exact methods and heuristics that solve only a single specific problem instance. Learning agents are able to generalize solutions with reasonable solution accuracy (compared to exact methods) by discovering repeatable patterns. The learning agent (LA3_D) learns to optimize charging decisions for day-ahead electricity market. The agent is based on a sequential decision-making model that observes the state of the system (that includes vehicles; chargers; trip lengths and energy demand; departure deadline; electricity price); takes a control action of assigning vehicles to chargers at particular charging rates and at specific time slots; and obtains a reward for the respective action. The reward encodes the operation objective of cost-effective charging, but without delays that impact departure of vehicles from the depot. This form of reinforcement guides the agent to explore better control actions, and eventually obtains an approximate solution that is close to the optimal strategy.

In the intra-day planning module, the present disclosure utilizes a heuristic approach (GH_I) that makes greedy decisions in intra-day electricity market. Because intra-day market prices are more volatile and have much shorter clearing windows, decisions have to be taken quickly. So, a system based on priority order for planning charging/discharging actions in the intra-day market is built.

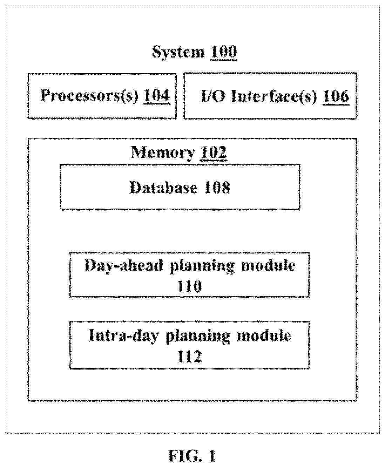

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

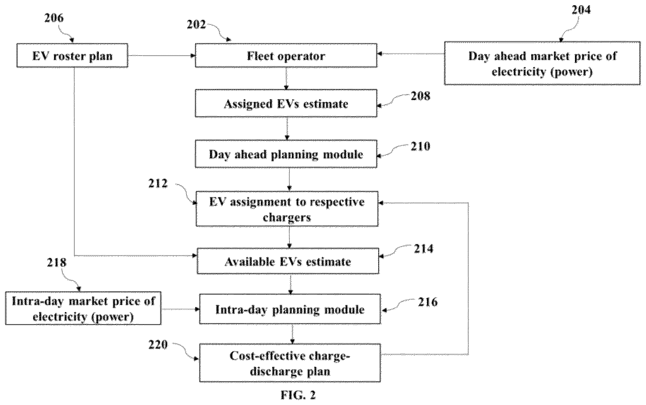

FIG. 2 illustrates a diagram of the steps executed by a fleet operator for preparing bidirectional charging plan day-ahead and intra-day charging of electric vehicle fleet, according to some embodiments of the present disclosure.

In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 102 may include a database or repository. The memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. In an embodiment, the memory 102 includes a database 108, a day-ahead planning module 110 and an intra-day planning module 112. The database 108 stores a complete schedule of all the electric vehicles (EVs) tagged for day-ahead or intra-day charging along with their delivery schedules. The day-ahead planning module 110 prepares EV charging plan in advance, based on EV delivery schedules for the next day. The intra-day planning module 112 estimates available EVs at the station along with the available power in each EVs and suggests to prepare next delivery EVs by charging-discharging actions. The memory 102 further includes a plurality of modules (not shown here) comprises programs or coded instructions that supplement applications or functions performed by the system 100 for executing different steps involved in the process of managing fleets of electric vehicles through bidirectional charging with arbitrage. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 104, or by a combination thereof. The plurality of modules can include various sub-modules (not shown).

FIG. 2 illustrates a diagram of the steps executed by a fleet operator for preparing bidirectional charging plan electric vehicle fleet.

As illustrated in FIG. 2, the fleet operator needs to manage a fleet of EVs for last-mile deliveries and can also trade energy (that is stored in the EV batteries) with the energy market without comprising delivery operations. Electricity wholesale market (such as day-ahead or intra-day) is the single source of energy available to the operator for fulfilling energy requirements of the entire fleet. EVs are rostered to do multiple delivery trips in a day. This timetable is prepared in advance, where vehicles are assigned to designated routes along with their departure deadlines. EVs must leave the depot on time; complete their respective delivery trips; return back to the same depot; and then resume the subsequent trip. At step 202, the fleet operator receives the day-ahead market price 204 and EV roster plan 206. At step 208, based on the EV roster plan 206, the fleet operator gets an estimate of already assigned EVs. These already assigned EVs are the once for which trips are planned well in advance with all the estimate of duration of run as well as the distance to be covered. At step 210, the estimate of assigned vehicle is fed to the day-ahead planning module 110. At step, 212, the day-ahead planning module 110 assigns specific chargers to the assigned EVs. Therefore, effective management of EVs for charging can be done through day-ahead planning module 110. At step, 214, the fleet operator extracts an information about available EVs. The available EVs are the ones which are not assigned for any upcoming trip but are expected to be ready and prepared for any unforeseen trip. At step 216, the intra-day market price of the electricity 218 is fed to the intra-day planning module 112 receives the and accordingly, the intra-day planning module 112 prepares the cost-effective charging-discharging plan 220. The fleet operator receives intra-day electricity prices are only a few hours before the market opens for business. It is, therefore, essential for the fleet operator to obtain a cost-effective charge-discharge plan in order to ensure timely delivery operations; which gets all EVs charged to the right battery levels by their departure time and can efficiently arbitrage by (dis)charging with the energy markets.

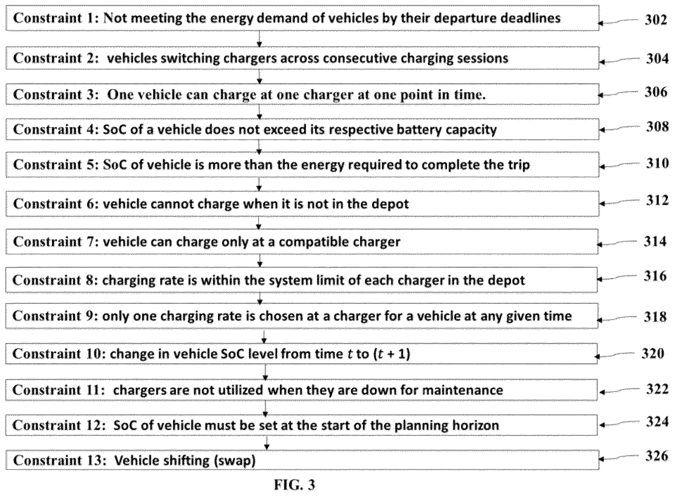

FIG. 3 is a functional block diagram of sequential constraint application in the day-ahead charge planning for managing the fleet of electronic vehicles, according to some embodiments of the present disclosure.

As illustrated in FIG. 3, the day-ahead charge planning is modeled to minimize the charging cost of all vehicles in the fleet using electricity prices from the day-ahead energy market. The day-ahead charge planning is modeled by implementing certain intrinsic as well as extrinsic constraints. The sequential application of these constraints directs the model for guided assistance of charge utilization among vehicles in the EV fleet. It is given by:

$$u^D = \min_{\{a^D_{(i,j)}, r^D_{(i,j,k)}, \delta_i, q^D_i, \lambda_i\}} \left\{ \sum_{t \in \mathcal{T}} \sum_{i \in \mathcal{V}} \sum_{j \in C} \sum_{k \in \mathcal{R}} p^D(t) * \left( r^D_{(i,j,k)} \cdot \mathcal{R}(k) \right) + \overline{u}^D \right\} \qquad (1)$$

As illustrated in FIG. 3, at step 302, the penalty term $\overline{u}^D$ in equation Eq. (1) is the cost of not meeting the energy demand of vehicles by their departure deadlines is a first constraint introduced in the model. Further, at step 304, vehicles switching chargers across consecutive charging sessions is another constraints. It is given by:

$$\overline{u}^D = \left\{ \left( \sum_{i \in \mathcal{V}} (\lambda_i) \right)^2 + \left( \sum_{t \in \mathcal{T}} \sum_{i \in \mathcal{V}} (\delta_i(t)) \right)^2 \right\}^{\frac{1}{2}} \qquad (2)$$

Further, Eq. (1) is sequentially subject to the following constraints:

$$\sum_{i\in\mathcal{V}}\left(\alpha^{D}_{(i,j)}(t)\right) \leq 1 \quad \forall\, j \in C \tag{3}$$

As depicted at step 306, it is not possible for any vehicle in the fleet to charge at more than one charger simultaneously. This condition is enforced by constraint (3).

$$0 \leq q^{P}_{i}(t) \leq Q_{i} \qquad \forall i \in \mathcal{V}, \forall t \in \mathcal{T} \tag{4}$$

At step 308, at any given time, constraint (4) ensures that the state of charge (SoC) of a vehicle does not exceed its respective battery capacity.

$$q^{P}_{i}(t) + (M \cdot \lambda_{i}) \geq e_{i}(t) \quad \forall\, i \in \mathcal{V}, \forall t \in \mathcal{T} \tag{5}$$

It is also necessary that the SoC of every vehicle is more than energy required to complete its assigned trip at any given time. This condition is fulfilled by constraint (5) at step 310. However, in the case of a delay in vehicle departure ($\lambda_{i} = 1$), a large constant M is used to enforce this condition.

$$\sum_{j\in C}[\{1 - \psi_{i}(t)\} \cdot \alpha^{D}_{(i,j)}(t)] - \lambda_{i} < 1 \,\forall\, i \in \mathcal{V}, \forall t \in \mathcal{T} \tag{6}$$

Constraint (6) at step 312 guarantees that a vehicle cannot charge when it is not in the depot. The respective vehicle does not leave the depot at its original departure time when it is delayed (Ai = 1).

$$\sum_{j\in C}[\{1 - \mu_{(i,j)}\} \cdot \alpha^{D}_{(i,j)}(t)] < 1 \quad \forall\, i \in \mathcal{V}, \forall t \in \mathcal{T} \tag{7}$$

Constraint (7) at step 314 ensures that a vehicle can charge only at a compatible charger

$$\{R^{\min}_{j} \cdot \alpha^{D}_{(i,j)}(t)\} \leq \{r^{D}_{(i,j,k)}(t) \cdot \mathcal{R}(k)\} \leq \{R^{\max}_{j} \cdot \alpha^{D}_{(i,j)}(t)\}\, i \in \mathcal{V}, j \in C, k \in \mathcal{R}, t \in \mathcal{T} \tag{8}$$

Constraint (8) at step 316 enforces that the charging rate is within the system limit of each charger in the depot.

$$\sum_{k\in\mathcal{R}}\left(r^{D}_{(i,j,k)}(t)\right) \leq 1 \qquad \forall\, i \in \mathcal{V}, j \in C, t \in \mathcal{T} \tag{9}$$

Constraint (9) at step 318 ensures that only one charging rate is chosen at a charger for a vehicle at any given time.

$$q^{P}_{i}(t+1) = q^{P}_{i}(t) + [\{\psi_{i}(t) \cdot r^{D}_{(i,j,k)}(t) \cdot \mathcal{R}(k)\} - \{H(1 - \psi_{i}(t)) \cdot (1 - \lambda_{i})\}],$$
$$\forall i \in \mathcal{V}, \forall j \in C, \forall k \in \mathcal{R} \tag{10}$$

Constraint (10) at step 320 captures the change in vehicle SoC level from time t to ($t + 1$). The term

$$\{\psi j\,(t)\cdot \mathrm{r}^{\mathbf{D}}_{(i,j,k)}\,(t)\cdot \mathrm{R}(k)\}$$
represents the amount of energy charged at time *t*. The term $\{H(1\ \text{-}ipj\,(t)\cdot(1\ \text{-}\lambda i)\}$ describes the amount of energy discharged during a vehicle run; with the exception of a delay in vehicle departure from the depot.

$$\sum_{i\in C}\left[\{1-\phi_i(t)\}\cdot\alpha^D_{(i,j)}(t)\right]\le 1\forall i\in\mathcal{V},\forall t\in\mathcal{T} \tag{11}$$

The condition that the chargers are not utilized when they are down for maintenance is ensured by constraint (11) at step 322.

$$q^D_i(0)=q^{init}_i \tag{12}$$

The SoC of every vehicle in the fleet must be set at the start of the planning horizon. It is ensured by constraint (12) at step 324.

$$\delta_i(t)=\sum_{j\in C,j\in C-\{j\}}\alpha^D_{(i,j)}(t-1)\cdot\alpha^D_{(i,j)}(t)\forall i\in\mathcal{V},t\in\{2..\mathcal{T}\} \tag{13}$$

Constraint (13) at step 326 accounts for the vehicle shifts. It is calculated as the number of switching instances of a vehicle with respect to the charger in consecutive time steps. The final output parameters of the day-ahead charge planner are the decision variables $\alpha^D_{(i,j)}\,(t)$ and $\mathrm{r}^D_{(i,j,k)}\,(t)$ for all t $\in$ T. They are given as input parameters to the intra-day charge-discharge planning module. All other parameters related to electricity markets, vehicles, and chargers are reset. The notations used in the above equations as well as in foregoing discussion are presented in Table-1

Table-1

| Symbol | Meaning |
|---|---|
| t | Time index |
| **Sets** | |
| V = {v1, ..., vI } | set of *I* EVs (at depot) |
| C = {c1, ..., cJ } | set of *J* chargers (at depot) |
| R = {r1, ..., rK } | set of *K* charging rates |
| D = {d1, ..., dL } | set of *L* discharging rates |
| T = {t1, ..., tT } | set of *T* scheduling intervals |
| **Charger Parameter** | |
| $\phi_j(t)$ | 1 : if charger *j* is available at time *t*<br>0 : otherwise |
| $R^{min}_j, R^{max}_j$ | min. & max. charging rate (amp) of charger *j* |
| $D^{min}_j, D^{max}_j,$ | min. & max. discharging rate (amp) of charger *j* |

(continued)

| Vehicle Parameter | |
|---|---|
| $a_{(i,j)}^{(D)}(t)$ | 1: if EV $i$ is charging at charger $j$ at time $t$ in day-ahead market; <br> 0: otherwise |
| $a_{(i,j)}^{(I)}(t)$ | 1: if EV $i$ is charging at charger $j$ in interval $t$ in intra-day market; <br> 0: otherwise |
| $r_{(i,j,k)}^{(D)}(t)$ | 1: if EV $i$ is charging at charger $j$ at charging rate R($k$) at time $t$ in day-ahead market; <br> 0: otherwise |
| $r_{(i,j,k)}^{(I)}(t)$ | 1: if EV $i$ is charging at charger $j$ at charging rate R($k$) at time $t$ in intra-day market; <br> 0: otherwise |
| $d_{(i,j,l)}^{(I)}(t)$ | 1: if EV $i$ is discharging at charger $j$ at charging rate $_D(l)$ at time $t$ in intra-day market; <br> 0: otherwise |
| $\delta_i(t)$ | 1: if EV $i$ switched chargers between ($t$ - 1) & $t$; <br> 0: otherwise |
| $\lambda_i$ | 1: if EV $i$ does not depart on time; 0: otherwise |
| $q_i(t)$ D | SoC of EV $i$ at time $t$ in day-ahead market; |
| I $q_i(t)$ | SoC of EV $i$ at time $t$ in intra-day market |
| Energy Market Parameters | |
| $p^{\wedge D}(t)$ | Forecast of day-ahead electricity market price at time t |
| $_p{}^{\wedge}{}_I(t)$ | Forecast of intra-day electricity price at time t |
| Decision Variables | |
| $\alpha_{(i,j)}^{D}(t)$ | 1: if EV $i$ is charging at charger $j$ at time $t$ in day-ahead market; 0: otherwise |
| $\alpha_{(i,j)}^{I}(t)$ | 1: if EV $i$ is charging at charger $j$ in interval $t$ in intra-day market; 0: otherwise |
| $r_{(i,j,k)}^{ID}(t)$ | 1: if EV $i$ is charging at charger $j$ at charging rate R(k) at time $t$ in day-ahead market; 0: otherwise |
| $r_{(i,j,k)}^{I}(t)$ | 1: if EV $i$ is charging at charger $j$ at charging rate R(k) at time $t$ in intra-day market; 0: otherwise |
| $d_{(i,j,l)}^{I}(t)$ | 1: if EV $i$ is discharging at charger $j$ at charging rate D($l$) at time $t$ in intra-day market; 0: otherwise |
| $\delta_i(t)$ | 1: if EV $i$ switched chargers between ($t$ - 1) & $t$; 0: otherwise |
| $\lambda_i$ | 1: if EV $i$ does not depart on time; 0: otherwise |
| $q_i^{D}(t)$ | SoC of EV $i$ at time $t$ in day-ahead market; |
| $q_i^{I}(t)$ | SoC of EV $i$ at time $t$ in intra-day market |

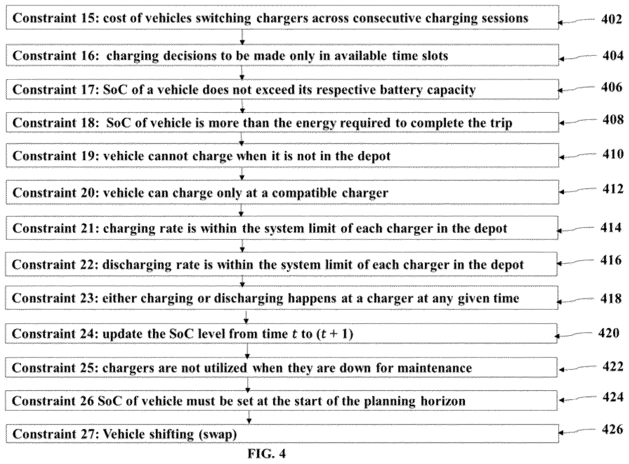

FIG. 4 is a functional block diagram of sequential constraint application in the intra-day charge planning for managing the fleet of electronic vehicles, according to some embodiments of the present disclosure.

As illustrated in FIG. 4, the intra-day charge planning is modeled to maximize the revenue through energy arbitrage. This implies minimizing the cost of energy bought through charging and maximizing the cost of energy sale through discharging using intra-day electricity prices. The intra-day charge planning is modeled by implementing certain intrinsic as well as extrinsic constraints. The sequential application of these constraints directs the model for guided assistance of charge utilization by balancing through charging-discharging mechanism wherein based on sequential application of constraints, model identifies EVs for charging and the EVs for discharging. It is given by:

$$\mathcal{U}^I = (min)\{\alpha_{(i,j)}^I, r_{(i,j,k)}^I, \bar{r}_{(i,j,k)}^I, \delta_i, q_i^I, \lambda_i\} \left\{ \begin{array}{l} \sum_{t \in \mathcal{T}} \sum_{i \in \mathcal{V}} \Sigma_{j \in C} \Sigma_{l \in \mathcal{D}} \Sigma_{k \in \mathcal{R}} \cdot p^I(t) \\ * \left( r_{(i,j,k)}^I \cdot \mathcal{R}(k) - d_{(i,j,l)}^I \cdot \mathcal{D}(l) \right) + \bar{\mathcal{U}}^I \end{array} \right\}$$

$$(14)$$

As illustrated in FIG. 4, at step 402, the penalty term $\bar{\mathcal{U}}^I$ in equation Eq. (14) is the cost of vehicles switching chargers across consecutive charging sessions. It is given by:

$$\bar{\mathcal{U}}^I = \left\{ \sum_{t \in \mathcal{T}} \left( \sum_{i \in \mathcal{V}} \left( \delta_i(t) \right) \right) \right\} \qquad (15)$$

Eq. (14) is subject to the following constraints:

$$\sum_{i \in \mathcal{V}} \left\{ \alpha_{(i,j)}^D(t) + \alpha_{(i,j)}^I(t) \right\} \leq 1 \forall j \in C, \qquad (16)$$

Constraint (16) at step 404 ensures that the intra-day charging decisions are made only in available time slots and do not override the day-ahead schedules.

$$0 \leq q_i^I(t) \leq Q_i \quad \forall i \in \mathcal{V}, \forall t \in \mathcal{T},$$
$$q_i^I(t) \geq e_i(t) \quad \forall i \in \mathcal{V}, \forall t \in \mathcal{T}, \qquad (17) \,\&\, (18)$$

Constraints (17), (18) at steps 406 and 408 are similar to constraints (4), (5) respectively; but for meeting the SoC requirements for intra-day schedule.

$$\sum_{j \in C} \left[ \{1 - \psi_i(t)\} \cdot \alpha_{(i,j)}^I(t) \right] < 1 \quad \forall i \in \mathcal{V}, \forall t \in \mathcal{T},$$
$$\sum_{j \in C} \left[ \{1 - \mu_{(i,j)}\} \cdot \alpha_{(i,j)}^I(t) \right] < 1 \quad \forall i \in \mathcal{V}, \forall t \in \mathcal{T}, \qquad (19) \,\&\, (20)$$

Constraints (19), (20) at steps 410 and 412 are similar to constraints (6), (7) respectively; but for meeting the vehicle availability and vehicle-charger compatibility conditions for intra-day schedule.

$$\left\{ R_j^{min} \cdot \alpha_{(i,j)}^I(t) \right\} \leq \left\{ r_{(i,j,k)}^I(t) \cdot \mathcal{R}(t) \right\} \leq \left\{ R_j^{max} \cdot \alpha_{(i,j)}^I(t) \right\}$$
$$\forall i \in \mathcal{V}, \forall j \in C, \forall k \in \mathcal{R}, \forall t \in \mathcal{T},$$
$$\left\{ R_j^{min} \cdot \alpha_{(i,j)}^I(t) \right\} \leq \left\{ d_{(i,j,k)}^I(t) \cdot \mathcal{D}(t) \right\} \leq \left\{ R_j^{max} \cdot \alpha_{(i,j)}^I(t) \right\} \qquad (21) \,\&\, (22)$$
$$\forall i \in \mathcal{V}, \forall j \in C, \forall l \in \mathcal{D}, \forall t \in \mathcal{T},$$

Constraints (21), (22) at steps 414 and 416 enforce that the charging and discharging rates are within the system limit of each charger in the depot.

$$\sum_{k \in \mathcal{R}} \left( r^I_{(i,j,k)}(t) \right) + \sum_{l \in \mathcal{D}} \left( d^I_{(i,j,l)}(t) \right) \le 1 \forall i \in \mathcal{V}, \forall j \in C, \forall t \in \mathcal{T}, \qquad (23)$$

Constraint (23) at step 418 ensures that either charging or discharging happens at a charger at any given time, and that only one charging or discharging rate is chosen for the respective operation.

$$q^I_i(t+1) \;=\; q^I_i(t) + \{r^D_{(i,j,k)}(t) + r^I_{(i,j,k)}(t)\} \cdot \mathcal{R}(k)\} -$$
$$\{d^I_{(i,j,l)}(t) \cdot \mathcal{D}(l)\} - \{H(1 - \psi_i(t))\} \qquad (24)$$
$$\forall i \in \mathcal{V}, \forall j \in C, \forall k \in \mathcal{R}, \forall l \in \mathcal{D},$$

Constraint (24) at step 420 is used to update the SoC level from time t to (t + 1), taking into account the day-ahead energy commitment and the charging/discharging done using intra-day market.

$$\sum_{i \in C} [\{1 - \phi_i(t)\} \cdot \alpha^I_{(i,j)}(t)] \le 1 \qquad \forall i \in \mathcal{V}, \forall t \in \mathcal{T},$$
$$q^I_i(0) = q^{init}_i \qquad \forall i \in \mathcal{V}, \qquad (25), (26)\ \&\ (27)$$
$$\delta_i(t) = \sum_{j \in C, j \in C - \{j\}} \alpha^I_{(i,j)}(t-1) \cdot \alpha^I_{(i,j)}(t)$$
$$\forall i \in \mathcal{V}, \forall t \in \{2..\mathcal{T}\}.$$

Constraints (25), (26), (27) at steps 422, 424 and 426 ensure charger availability; initialize the starting SoC of each vehicle; account for the vehicle shifts across chargers. They are similar to constraints (11), (12), (13) respectively, but for the intra-day schedule.

According to an embodiment of the present disclosure, many of the constraints defined above in the optimization routines are non-linear. Even though they can be linearized using additional binary variables, the modified problem is still computationally expensive and hard to solve optimally. (ii) Solving the problem on a scale is even more difficult. Each decision time-step results in ($I * J * K$) decision variables. Therefore, even for a small problem size of $I = 5$; $J = 3$; $K = L = 16$ and $T = 96$ time steps (considering 15 min decision interval), the decision space is significantly large with 5760 decision variables. This space grows exponentially as the problem scales with more vehicles, chargers, and charging/discharging rates; which lead to extremely long computational delays that take days to get an optimal solution. To overcome the above challenges and maintain a reasonable solution accuracy, the present disclosure proposes an approximate method to optimize the problem of handling large constraints using a learning agent.

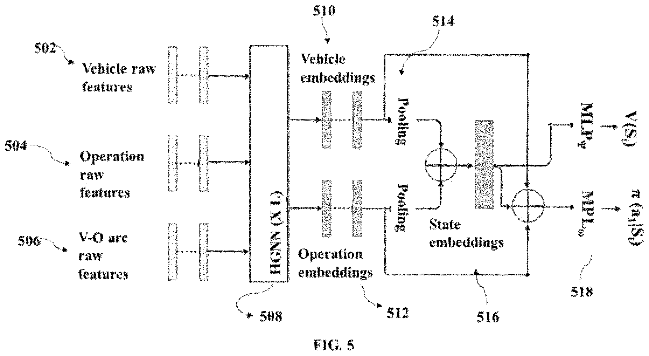

FIG. 5 illustrates an architecture of the system of FIG. 1 for managing bi-directional charging, according to some embodiments of the present disclosure.

As illustrated in FIG. 5, vehicle raw features 502, operation raw features 504 and V-O arc raw features 506 are input to the heterogeneous graph neural network (HGNN). The vehicle raw features 502 comprises of $b_i(t)$, a binary value indicating if vehicle $vi$ needs charging (1) or not (0) at time-step t; $|Nt(v_i)|$, num. of neighboring operation nodes of vehicle node vi at time-step t; $E_i(t)$, required trip SoC of vehicle vi at time-step t; and $T^d_i(t)$, duration left for vehicle vi to depart from the depot at t. The operation raw features 504 includes $b_{jk}(t)$, binary value indicating if operation $o_{kj}$ (charger k; charging rate j) is available (1) or not (0) at t, $|Nt(o_{jk})|$, number of neighboring vehicle nodes of operation node $o_{jk}$ and $\widehat{P^D}(t)$, forecast of day-ahead electricity market price at time t. The V-O arc raw features 506 include $\delta_i(t)$, total number of vehicle shifts. The input to GNN 508 architecture is processed in two-stage embedding that efficiently encode the varying size heterogeneous graph Gt and obtain a fixed-dimensional embedding of size $\vec{d}$. The two-stage embedding comprises of (i) Vehicle embedding 510 and (ii) Operation embedding 512. In the vehicle embedding 510 the neighbors of a vehicle node vi in Gt are a set of operation nodes Nt(vi) of different importance levels. In order to learn these relationships, an attention mechanism is applied. Since each vi is connected with a neighboring Ojk with only one e(i,j,k); the corresponding feature vectors of each $Ojk \in Nt(vi)$ and e(i,j,k) are concatenated to obtain $\sigma ijk = [\sigma jk \| \varphi ijk] \in R4$. The attention coefficients eijk for vehicle node to neighboring operation nodes is given as:

$$\bar{e}_{ijk} = \text{LeakyReLU}\left(\mathbf{a}^\top\left[\mathbf{W}_1^{\mathcal{V}}\vartheta_i \parallel \mathbf{W}_1^{O}\sigma_{ijk}\right]\right) \tag{28}$$

where $\mathbf{W}_1^{V}\vartheta_i \in \mathbf{R}^{\vec{d}\times 4}$ and $\mathbf{W}_1^{O} \in \mathbf{R}^{\vec{d}\times 4}$ are the respective linear transformations for vehicle and operation nodes; $a \in \mathbf{R}^{\vec{2d}}$; $\vartheta i \in \mathbf{R}^4$. The attention coefficient $\overline{e_{11}}$ for vehicle node to itself is given as:

$$\bar{e}_{ii} = \text{LeakyReLU}\left(\mathbf{a}^\top\left[\mathbf{W}_1^{\mathcal{V}}\vartheta_i \parallel \mathbf{W}_1^{\mathcal{V}}\vartheta_i\right]\right) \tag{29}$$

The normalized attention coefficients $\bar{a}ijk$ b' eijk is obtained by using the softmax function. The aggregate embeddings $v^{\wedge}i \in \mathbf{R}^{\bar{d}}$ of vehicle node $vi$ is given as:

$$v_i = \bar{\alpha}_{ii}\mathbf{W}_1^{\mathcal{V}}\vartheta_i + \sum_{o_{jk}\in N_t(v_i)} \bar{\alpha}_{ijk}\mathbf{W}_1^{O}\sigma_{ijk} \tag{30}$$

The operation embedding 512 uses the same architecture as that of vehicle embedding with the exception of the features. The feature vector of each $vi \in Nt(ojk)$ is extended by concatenating it with the corresponding edge as: $\vartheta ijk = [\vartheta i\|\varphi ijk] \in \mathbf{R}5$. The attention coefficients eijk for operation node to neighboring vehicle nodes is calculated as:

$$e_{ijk} = \text{LeakyReLU}\left(\mathbf{a}^\top\left[\mathbf{W}_2^{\mathcal{V}}\vartheta_{ijk} \parallel \mathbf{W}_2^{O}\sigma_{jk}\right]\right) \tag{31}$$

Where $\mathbf{W}_2^{V}\vartheta_i \in \mathbf{R}^{\vec{d}\times 5}$ and $\mathbf{W}_2^{O} \in \mathbf{R}^{\vec{d}\times 3}$ are the respective linear transformations for vehicle and operation nodes; $a \in \mathbf{R}^{\vec{2d}}$; $\sigma_{jk} \in \mathbf{R}^4$. The attention coefficient $\hat{e}_{jj}$ for operation node to itself is:

$$e_{jj} = \text{LeakyReLU}\left(\mathbf{a}^\top\left[\mathbf{W}_2^{O}o_{jk} \parallel \mathbf{W}_2^{O}o_{jk}\right]\right) \tag{32}$$

The normalized attention coefficients $\hat{a}iijk$ b' eijk and ajj b' ejj is obtained by using the softmax function. The aggregate embeddings $\hat{o}jk \in \mathbf{R}^{\vec{d}}$ of operation node $ojk$ is given as:

$$o_{jk} = \alpha_{jj}.\mathbf{W}_2^{O}\sigma_{jk} + \sum_{v_i\in N_t(o_{jk})} \alpha_{ijk}.\mathbf{W}_2^{\mathcal{V}}.\vartheta_{ijk} \tag{33}$$

The vehicle embedding 510 and operation embedding 512 are stacked and passes through pooling layers 514 to derive state embeddings 516. The final embeddings $\hat{v}_i^{(L)}$ and $\hat{o}_{jk}^{(L)}$ are obtained by passing $\hat{v}_i$ and $\hat{o}_{jk}$ through $L$ GNN layers of identical structure. Mean pooling is applied after these $L$ layers to obtain the vehicle and operation embedding sets separately, each of $\vec{d}$- dimension. It is then concatenated to obtain the single state embedding set 516 $At \in \mathbf{R}^{\vec{2d}}$ of graph state $Gt$. It is given as:

$$h_t = \left[\frac{1}{|O|}\sum_{o_{jk}\in O}\left(o_{jk}^L\right) \parallel \frac{1}{|\mathcal{V}|}\sum_{v_i\in V}\left(v_i^L\right)\right] \tag{34}$$

The state embedding 516 is then pass through multilayer perceptron (MLP)518. The MLP 518 triggers respective action At. The action At is the vehicle to charging operation assignment at time-step $t$. It is selected either at the start of an episode when all vehicles are unassigned, or when any vehicle is waiting for assignment. This action is derived in the following manner. For each of the feasible actions $\{vi, ojk\}$ at $t$, the corresponding vehicle, operation and state embeddings are concatenated, and given to a policy network to get a priority index of those actions that can be selected at state $\overline{S}_t$. The assignment of vehicle $vi$ to charger $cj$ at charging rate $rk$ is chosen as the action with the highest priority value. The process is repeated until the energy demand for vehicle $vi$ is fulfilled or there are no more feasible actions for vehicle $vi$. The environment is updated along with the reward for the assigned action.

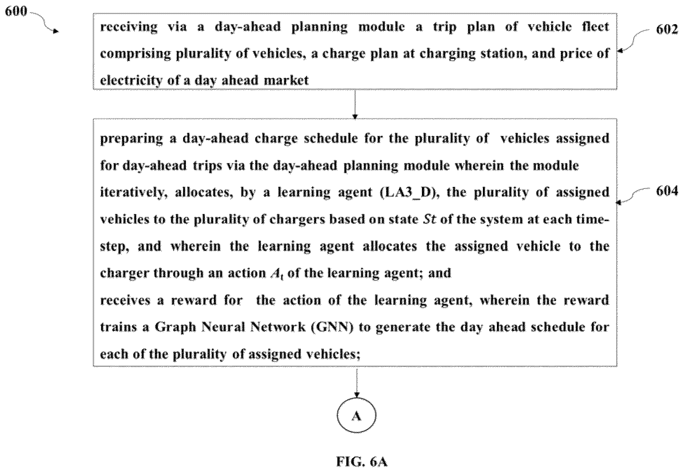

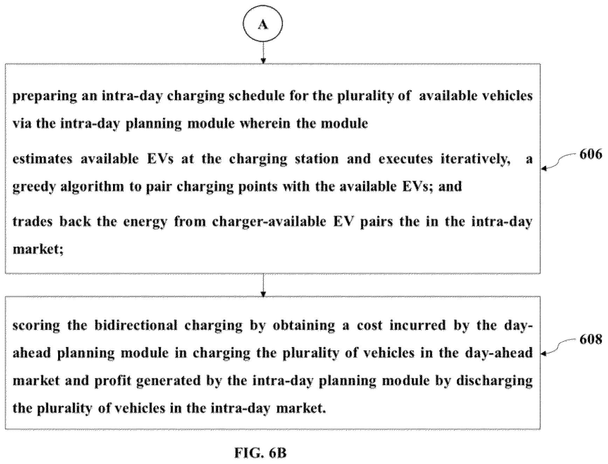

FIG. 6 illustrates a flow diagram depicting a method for managing bi-directional charging, according to some embodiments of the present disclosure.

The steps of the method 600 of the present disclosure will now be explained with reference to the components or blocks of the system 100 as depicted in FIG. 1 through FIG. 7. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 602 of the method 600, the one or more hardware processors 104 are configured to receive, via day-ahead planning module 110, a trip plan of a vehicle fleet comprising a plurality of vehicles assigned for a day-ahead charge and a plurality of vehicles marked for an intra-day charge. The trip plan also includes vehicle specification, number of trips assigned, distance of each trip and the status of power available in the vehicle. Further, the day-ahead planning module 110 includes a charge plan of the EV charging station, and price of electricity of a day ahead market. Based on above inputs, at step 604 of the method 600, the day-ahead planning module 110 prepares a day-ahead charge schedule for each of the plurality of assigned vehicles. The day-ahead schedule preparation comprises selecting, from the trip plan, the plurality of vehicles assigned for the day-ahead trip and assessing a state $\overline{S}_t$ of the system at each time-step by scheming the plurality of assigned vehicles and a plurality of chargers available at the EV charging station for charging the plurality of assigned vehicles. The state of the system is defined by all the features based on which the day ahead planning module 110 executes possible allocation of EVs to the chargers from the plurality of chargers at the charging station. The allocation is executed by a learning agent (LA3_D) wherein the plurality of assigned vehicles is allocated to the plurality of available chargers as the learning agent observes the state $St$ of the system at each time-step and takes an $At$. The action of the learning agent is allocation of the charger to the assigned vehicle. The learning agent (LA3_D) iteratively, transitions to a next time-step, and continue allocating the plurality of assigned vehicles to the plurality of chargers; and receives a reward for the action of the learning agent, wherein the reward trains a Graph Neural Network (GNN) to generate the day ahead schedule for each of the plurality of assigned vehicles. The reward function for each action $\overline{A}_t = \{vi, ojk\}$ choose the reward $\overline{R_{t+1}}$ is given as a weighted sum of four components:

$$\overline{R}_{t+1} = -\left\{A_1 \cdot p^D(t) \cdot r^D_{(i,j,k)} \cdot \mathcal{R}(k)\right\} + \left\{A_2 \cdot \left(\frac{E_i(t)}{T_i^d(t)}\right)\right\} - \{A_3 \cdot \delta_i(t)\} - \{A_4 \cdot \lambda_i\}$$

$$(35)$$

The first term is the cost of charging, and a negative reward is given for reducing this factor. The charging urgency is captured by the second term, and a positive reward is given to actions that prioritize such assignments. The negative reward of the third and fourth terms, respectively, prevent vehicles from shifting chargers and incurring delays in their departure schedules. *A1,* A2, *A3, A4* are non-negative weight coefficients. The training of the learning agent (LA3_D) involves obtaining policies using the proximal policy optimization (PPO) technique. It is a type of actor-critic algorithm consisting of two neural networks $\pi\theta$ and $\pi\omega$. The actor (or policy function) network $\pi\theta$ learns the actions to be taken for an observed state, while the critic (or value function) network $\pi\omega$ learns to evaluates actions taken by the actor based on the given policy. Both $\pi\theta$ and $\pi\omega$ has the same network structure with two hidden layers and one activation layer. $\pi\theta$ takes $\widehat{h_t}$ as input and gives a list of probabilities as output, with one probability per action selected at that state. Note that

$$\widehat{h_t} = [\ \widehat{v_i}\ \|\ \widehat{\sigma_{jk}}\ \|ht]$$

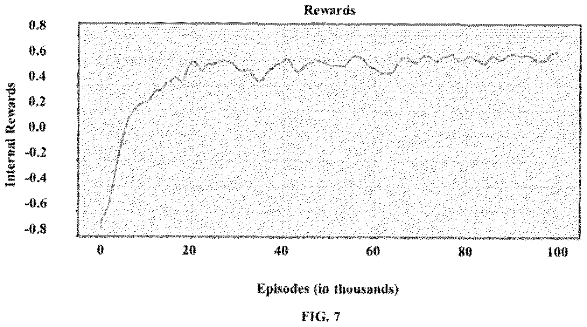

is obtained by concatenating the corresponding operation, vehicle, and state embedding sets for each feasible action. $\pi\omega$ takes $\widehat{h_t}$ as input and gives a single number representing the estimated value of the action. $\pi\theta$ optimizes the policy according to the value given by $\pi$w. The learning agent was trained using randomly generated datasets generated using specifications given in the work by Garg et. al. Electricity prices from the day-ahead and intra-day energy markets (and other related parameters) are taken from Turkey EPIAS. The average reward received by the agent during the training phase is shown in FIG. 7. It is observed that the agent learns aggressively over 60K episodes and stabilizes thereafter.

At step 606 of the method 600, the one or more hardware processors 104 are configured to receive, via intra-day planning module 112, the day-ahead schedule of each of the plurality of assigned vehicles generated by the day-ahead planning module 110. The intra-day planning module 112 further receives price of an electricity of an intra-day market. Based on these inputs, the intra-day planning module 112 identifies available time slots for the intra-day schedule from the day-ahead schedule at each time-step by executing a greedy algorithm (GH_I) to determine feasibility of possible assignment of suitable charger to the available vehicle to derive charger-EV pairing. At each time-step $t \in$ T, the algorithm determines the feasibility of possible assignments (vehicle $vi \rightarrow$ charger $cj \rightarrow$ charging rate $rk$ or discharging rate $dl$) using a masking scheme. An assignment is considered infeasible if satisfies any of the following conditions:

- vehicle $vi$ is not available at $t$ (refer to Eq. 16 and Eq. 19)
- vehicle $v_i$-charger $c_j$ is not compatible for charging or discharging (refer to Eq. 20)
- charging rate $r_k$ and discharging rate $d_l$ are not within the system limit of charger $c_j$ (refer to Eq. 21 and Eq. (22))
- charging rate $r_k$ and discharging rate $d_l$ are both non-zero at charger $c_j$ at $t$ (refer to Eq. 23)
- charger $c_j$ is not available at $t$ (refer Eq. 25)

From this list, the algorithm chooses an assignment according to a priority function. It is a weighted sum of individual priority components that capture the: (a) urgency of a vehicle to charge; (b) cost of charging and discharging; (c) difference between the forecasted intra-day electricity cost at time t and the average forecasted cost of electricity for the entire day; (d) maximizes the rate of charging or discharging. The process is iterated until all participating vehicles get an assignment, or no more chargers are available. Therefore, the intra-day planning module 112 scans through a plurality of infeasible conditions and identifies feasible time slots for the assignment of a charger from the plurality of chargers to the available vehicle. The assignment facilitates discharging of the available vehicle at the charger from the plurality of chargers and trades back the energy in the intra-day market. The greedy heuristic further applies a priority function to prioritize the plurality of available EVs wherein the priority function is a weighted sum of an individual priority components. The intra-day planning modules 112, iteratively, prioritizes the vehicle allocation until all the available vehicles for the intra-day discharging get the charger for trading back the energy by way of discharging.

At step 608 of the method 600, the one or more hardware processors 104 are configured to score the bidirectional charging by obtaining a cost incurred by the day-ahead planning module in charging the plurality of vehicles in the day-ahead market and profit generated by the intra-day planning module by discharging the plurality of vehicles in the intra-day market.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The bidirectional (two-way) charging management is a decision control problem that aims to reduce the cost of operating an EV fleet using optimal charging/discharging strategies for energy procurement and sale. The present disclosure is an approach for the solving this problem at-scale by combining a learning model for day-ahead planning with a heuristic method for intra-day scheduling. The combined planning model gives a 17-23% cost reduction over cases that do not arbitrage energy. The embodiments of present disclosure herein address unresolved problem of effective utilization of power in the electricity market with an arbitrage wherein conscious planning is done through day-ahead planning module to buy electricity to charge the assigned vehicles and intra-day module planning module to trade back the electricity by discharging available vehicles.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

### Claims

**1.** A processor implemented method (600) for managing a bi-directional charging at an electric vehicle (EV) charging station, wherein the method (600) comprising:

receiving (602,) via one or more hardware processors, by a day-ahead planning module, a trip plan of a fleet of the EVs, wherein the fleet of the EVs comprising

a plurality of assigned vehicles for a day-ahead trip and a plurality of available vehicles at the EV charging station,
a charge plan of the EV charging station, and
price of electricity of a day ahead market;

preparing (604), via the one or more hardware processors, a day-ahead charge schedule for each of the plurality of assigned vehicles via the day-ahead planning module,
wherein preparing the day-ahead schedule comprises:

selecting, from the trip plan, the plurality of assigned vehicles for the day-ahead trip,
assessing a state $\overline{S_t}$ of a system at each time-step by scheming the plurality of assigned vehicles and a plurality of chargers available at the EV charging station for charging the plurality of assigned vehicles,
allocating, by a learning agent (LA3_D), the plurality of assigned vehicles to the plurality of chargers available and observing the state $St$ of the system at each time-step, wherein an allocation of a vehicle among the plurality of assigned vehicles to a charger among the plurality of chargers is an action At of the learning agent, iteratively, transitioning to a next time-step, and continue allocating the plurality of assigned vehicles to the plurality of chargers, and

receiving a reward for the action of the learning agent, wherein the reward trains a Graph Neural Network (GNN) to generate the day ahead schedule for each of the plurality of assigned vehicles;
preparing (606), via the one or more hardware processors, the intra-day schedule by an intra-day planning module, wherein preparing the intra-day schedule comprises:

receiving the day-ahead schedule of each of the plurality of assigned vehicles generated by the day-ahead planning module,
receiving price of electricity of an intra-day market,
identifying available time slots for the intra-day schedule from the day-ahead schedule at each time-step by executing a greedy algorithm to determine feasibility of possible assignment of suitable charger to the available vehicle to derive charger-EV pairing,

scanning through a plurality of infeasible conditions and identifies feasible time slots for the assignment of a charger from the plurality of chargers to the available vehicle,

discharging the available vehicle at the charger from the plurality of chargers and trading back the energy in the intra-day market,

applying a priority function to prioritize the plurality of available EVs wherein the priority function is a weighted sum of an individual priority components, and

iteratively, prioritizing the vehicle allocation until all the available vehicles for the intra-day discharging gets the charger for trading back the energy by way of discharging; and

scoring (608), via the one or more hardware processors, the bidirectional charging by obtaining a cost incurred by the day-ahead planning module in charging the plurality of vehicles in the day-ahead market and profit generated by the intra-day planning module by discharging the plurality of vehicles in the intra-day market.

2. The method as claimed in claim 1, wherein the trip plan includes vehicle specification, number of trips assigned, distance of each trip and the status of power available in the vehicle.

3. The method as claimed in claim 1, wherein the charge plan includes number of chargers available at the charging station and the charger maintenance time.

4. The method as claimed in claim 1, wherein the - state $\overline{S}_t$ at time-step t is defined as a graph Gt = $(\overline{V}, \varepsilon_t)$, wherein the set of nodes is denoted by $\overline{V}$ = V U 0, wherein V denotes the plurality of vehicles in the fleet and O denotes the plurality of chargers at the charging station.

5. The method as claimed in claim 1, wherein the action $A_t$ is the vehicle to charging operation assignment at time-step t and for each of the feasible actions $\{v_{i,\ ojk}\}$ at t, the corresponding vehicle, operation and state embeddings are concatenated, and given to a policy network to get a priority index of the actions selected at state $\overline{S}_t$.

6. The method as claimed in claim 1, wherein the GNN comprises of a two-stage embedding process to efficiently encode the varying size heterogeneous graph Gt and obtain a fixed-dimensional embedding of size $\vec{d}$, and wherein the two-stage embedding includes (i) a vehicle node embedding, and (ii) an operation node embedding.

7. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive by a day-ahead planning,
a trip plan of a fleet of the EVs, wherein the fleet of the EVs comprising a plurality of assigned vehicles for a day-ahead trip and a plurality of available vehicles at the EV charging station,

a charge plan of the EV charging station, and
price of electricity of a day ahead market;

prepare a day-ahead charge schedule for each of the plurality of assigned vehicles via the day-ahead planning module, wherein preparing the day-ahead schedule comprises:

selecting, from the trip plan, the plurality of assigned vehicle for the day-ahead trip,
assessing a state $\overline{S}_t$ of the system at each time-step by scheming the plurality of assigned vehicles and a plurality of chargers available at the EV charging station for charging the plurality of assigned vehicles,
allocating, by a learning agent (LA3_D), the plurality of assigned vehicles to the plurality of chargers available and observing the state $St$ of the system at each time-step, wherein an allocation of a vehicle among the plurality of assigned vehicles to a charger among the plurality of chargers is an action At of the learning agent,
iteratively, transitioning to a next time-step, and continuing allocating the plurality of assigned vehicles to the plurality of chargers, and
receiving a reward for the action of the learning agent, wherein the reward trains a Graph Neural Network (GNN) to generate the day ahead schedule for each of the plurality of assigned vehicles;

prepare an intra-day schedule by an intra-day planning module, wherein preparing the intra-day schedule comprises:

receiving the day-ahead schedule of each of the plurality of assigned vehicles generated by the day-ahead planning module,

receiving price of electricity of an intra-day market,

identifying available time slots for the intra-day schedule from the day-ahead schedule at each time-step by executing a greedy algorithm to determine feasibility of possible assignment of suitable charger to the available vehicle to derive charger-EV pairing,

scanning through a plurality of infeasible conditions and identifies feasible time slots for the assignment of a charger from the plurality of chargers to the available vehicle,

discharging the available vehicle at the charger from the plurality of chargers and trading back the energy in the intra-day market,

applying a priority function to prioritize the plurality of available EVs wherein the priority function is a weighted sum of an individual priority components, and

iteratively, prioritizing the vehicle allocation until all the available vehicles for the intra-day discharging gets the charger for trading back the energy by way of discharging; and

score the bidirectional charging by obtaining a cost incurred by the day-ahead planning module in charging the plurality of vehicles in the day-ahead market and profit generated by the intra-day planning module by discharging the plurality of vehicles in the intra-day market.

8.  The system as claimed in claim 7, wherein the trip plan includes vehicle specification, number of trips assigned, distance of each trip and the status of power available in the vehicle.

9.  The system as claimed in claim 7, wherein the charge plan includes number of chargers available at the charging station and the charger maintenance time.

10. The system as claimed in claim 7, wherein the state $\overline{S}_t$ at time-step $t$ is defined as a graph Gt = $(\overline{V}, \varepsilon_t)$, wherein the set of nodes is denoted by $\overline{V}$ = V U 0, wherein V denotes the plurality of vehicles in the fleet and O denotes the plurality of chargers at the charging station.

11. The system as claimed in claim 7, wherein the action $A_t$ is the vehicle to charging operation assignment at time-step t and for each of the feasible actions $\{v_i, o_{jk}\}$ at $t$, the corresponding vehicle, operation and state embeddings are concatenated, and given to a policy network to get a priority index of the actions selected at state $\overline{S}_t$.

12. The system as claimed in claim 7, wherein the GNN comprises of a two-stage embedding process to efficiently encode the varying size heterogeneous graph Gt and obtain a fixed-dimensional embedding of size $\vec{d}$, and wherein the two-stage embedding includes (i) a vehicle node embedding, and (ii) an operation node embedding.

13. One or more non-transitory machine-readable information storage mediums comprising one or more instructions which when executed by one or more hardware processors cause:

receiving by a day-ahead planning module,

a trip plan of a fleet of the EVs, wherein the fleet of the EVs comprising a plurality of assigned vehicles for a day-ahead trip and a plurality of available vehicles at the EV charging station,

a charge plan of the EV charging station, and

price of electricity of a day ahead market;

preparing a day-ahead charge schedule for each of the plurality of assigned vehicles via the day-ahead planning module, wherein preparing the day-ahead schedule comprises:

selecting, from the trip plan, the plurality of assigned vehicles for the day-ahead trip,

assessing a state $\overline{S}_t$ of a system at each time-step by scheming the plurality of assigned vehicles and a plurality of chargers available at the EV charging station for charging the plurality of assigned vehicles,

allocating, by a learning agent (LA3_D), the plurality of assigned vehicles to the plurality of chargers available and observing the state $St$ of the system at each time-step, wherein an allocation of a vehicle among the plurality of assigned vehicles to a charger among the plurality of chargers is an action At of the learning agent, iteratively, transitioning to a next time-step, and continue allocating the plurality of assigned vehicles to the plurality of chargers, and

receiving a reward for the action of the learning agent, wherein the reward trains a Graph Neural Network (GNN) to generate the day ahead schedule for each of the plurality of assigned vehicles;

preparing the intra-day schedule by an intra-day planning module, wherein preparing the intra-day schedule comprises:

receiving the day-ahead schedule of each of the plurality of assigned vehicles generated by the day-ahead planning module, receiving price of electricity of an intra-day market,

identifying available time slots for the intra-day schedule from the day-ahead schedule at each time-step by executing a greedy algorithm to determine feasibility of possible assignment of suitable charger to the available vehicle to derive charger-EV pairing,

scanning through a plurality of infeasible conditions and identifies feasible time slots for the assignment of a charger from the plurality of chargers to the available vehicle,

discharging the available vehicle at the charger from the plurality of chargers and trading back the energy in the intra-day market,

applying a priority function to prioritize the plurality of available EVs wherein the priority function is a weighted sum of an individual priority components, and

iteratively, prioritizing the vehicle allocation until all the available vehicles for the intra-day discharging gets the charger for trading back the energy by way of discharging; and

scoring the bidirectional charging by obtaining a cost incurred by the day-ahead planning module in charging the plurality of vehicles in the day-ahead market and profit generated by the intra-day planning module by discharging the plurality of vehicles in the intra-day market.

14. The one or more non-transitory machine-readable information storage mediums as claimed in claim 13, wherein the trip plan includes vehicle specification, number of trips assigned, distance of each trip and the status of power available in the vehicle.

15. The one or more non-transitory machine-readable information storage mediums as claimed in claim 13, wherein the charge plan includes number of chargers available at the charging station and the charger maintenance time.

System 100

Processors(s) 104 | I/O Interface(s) 106

Memory 102

Database 108

Day-ahead planning module 110

Intra-day planning module 112

FIG. 1

FIG. 2

Constraint 1: Not meeting the energy demand of vehicles by their departure deadlines ⟵ 302

Constraint 2: vehicles switching chargers across consecutive charging sessions ⟵ 304

Constraint 3: One vehicle can charge at one charger at one point in time. ⟵ 306

Constraint 4: SoC of a vehicle does not exceed its respective battery capacity ⟵ 308

Constraint 5: SoC of vehicle is more than the energy required to complete the trip ⟵ 310

Constraint 6: vehicle cannot charge when it is not in the depot ⟵ 312

Constraint 7: vehicle can charge only at a compatible charger ⟵ 314

Constraint 8: charging rate is within the system limit of each charger in the depot ⟵ 316

Constraint 9: only one charging rate is chosen at a charger for a vehicle at any given time ⟵ 318

Constraint 10: change in vehicle SoC level from time $t$ to $(t + 1)$ ⟵ 320

Constraint 11: chargers are not utilized when they are down for maintenance ⟵ 322

Constraint 12: SoC of vehicle must be set at the start of the planning horizon ⟵ 324

Constraint 13: Vehicle shifting (swap) ⟵ 326

FIG. 3

21

Constraint 15: cost of vehicles switching chargers across consecutive charging sessions — 402

Constraint 16: charging decisions to be made only in available time slots — 404

Constraint 17: SoC of a vehicle does not exceed its respective battery capacity — 406

Constraint 18: SoC of vehicle is more than the energy required to complete the trip — 408

Constraint 19: vehicle cannot charge when it is not in the depot — 410

Constraint 20: vehicle can charge only at a compatible charger — 412

Constraint 21: charging rate is within the system limit of each charger in the depot — 414

Constraint 22: discharging rate is within the system limit of each charger in the depot — 416

Constraint 23: either charging or discharging happens at a charger at any given time — 418

Constraint 24: update the SoC level from time $t$ to $(t+1)$ — 420

Constraint 25: chargers are not utilized when they are down for maintenance — 422

Constraint 26 SoC of vehicle must be set at the start of the planning horizon — 424

Constraint 27: Vehicle shifting (swap) — 426

FIG. 4

EP 4 527 682 A1

FIG. 5

600

receiving via a day-ahead planning module a trip plan of vehicle fleet comprising plurality of vehicles, a charge plan at charging station, and price of electricity of a day ahead market

602

preparing a day-ahead charge schedule for the plurality of vehicles assigned for day-ahead trips via the day-ahead planning module wherein the module iteratively, allocates, by a learning agent (LA3_D), the plurality of assigned vehicles to the plurality of chargers based on state $St$ of the system at each time-step, and wherein the learning agent allocates the assigned vehicle to the charger through an action $A_t$ of the learning agent; and

receives a reward for the action of the learning agent, wherein the reward trains a Graph Neural Network (GNN) to generate the day ahead schedule for each of the plurality of assigned vehicles;

604

A

FIG. 6A

A

preparing an intra-day charging schedule for the plurality of available vehicles via the intra-day planning module wherein the module

estimates available EVs at the charging station and executes iteratively, a greedy algorithm to pair charging points with the available EVs; and

trades back the energy from charger-available EV pairs the in the intra-day market;

606

scoring the bidirectional charging by obtaining a cost incurred by the day-ahead planning module in charging the plurality of vehicles in the day-ahead market and profit generated by the intra-day planning module by discharging the plurality of vehicles in the intra-day market.

608

FIG. 6B

FIG. 7

26

Europäisches
Patentamt

European
Patent Office

Office européen
des brevets

# EUROPEAN SEARCH REPORT

**Application Number**

EP 24 19 6193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAHMAN SAIDUR SAIDUR@UALBERTA CA ET AL: "On efficient operation of a V2G-enabled virtual power plant when solar power meets bidirectional electric vehicle charging", PROCEEDINGS OF THE 21ST ACM WORKSHOP ON HOT TOPICS IN NETWORKS, ACMPUB27, NEW YORK, NY, USA, 9 November 2022 (2022-11-09), pages 119-128, XP058971601, DOI: 10.1145/3563357.3564067 ISBN: 978-1-4503-9887-9 * abstract * * 1. Introduction * * 4. Problem statement * * 5. Methodology * * figure 1 * | 1-15 | INV. B60L53/64 B60L55/00 G06N3/08 G06Q50/40 |
| X | WO 2023/049998 A1 (COWAN & ASSOCIATES MAN LTD [CA]) 6 April 2023 (2023-04-06) * paragraphs [0090] - [0092] * * paragraphs [0148] - [0264] * * figures 1-5 * | 1-15 | |

TECHNICAL FIELDS SEARCHED (IPC)

B60L
G06Q
G06N

The present search report has been drawn up for all claims

| Place of search | Date of completion of the search | Examiner |
|---|---|---|
| Munich | 30 January 2025 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6193

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | Publication date |
|---|---|---|---|
| WO 2023049998 A1 | 06-04-2023 | CA 3230281 A1<br>WO 2023049998 A1 | 06-04-2023<br>06-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321063946